# EUROPEAN PATENT SPECIFICATION

(11) **EP 3 509 443 B1**
(45) Date of publication and mention of the grant of the patent: **03.06.2020**
(21) Application number: 17765125.4
(22) Date of filing: 02.09.2017
(51) Int. Cl.: A24C 5/47, A24D 3/02

(54) **A FEEDING SYSTEM, A FEEDING UNIT, A FEEDER AND A METHOD FOR FEEDING ROD-LIKE ELEMENTS**
ZUFÜHRSYSTEM, ZUFÜHREINHEIT, ZUFÜHRVORRICHTUNG UND VERFAHREN ZUM ZUFÜHREN VON STABFÖRMIGEN ELEMENTEN
SYSTÈME DE DISTRIBUTION, UNITÉ DE DISTRIBUTION, DISTRIBUTEUR ET PROCÉDÉ DE DISTRIBUTION D'ÉLÉMENTS EN FORME DE TIGE

(30) Priority: 09.09.2016 PL 41863216
(43) Date of publication of application: 17.07.2019
(73) Proprietor: International Tobacco Machinery Poland Sp. z o.o., 26-600 Radom (PL)
(72) Inventor: LISOWSKI, Andrzej, 25-553 Kielce (PL); CIESLIKOWSKI, Bartosz, 26-400 Przysucha (PL)
(74) Representative: Kancelaria Eupatent.pl Sp. z.o.o
(86) International application number: PCT/EP2017/072036
(87) International publication number: WO 2018/046411

(56) References cited:
- US-A- 4 185 941
- US-A1- 2009 145 449

## Description

### TECHNICAL FIELD

The present invention relates to a feeding system, a feeding unit, a feeder and a method for feeding rod-like elements, applicable in tobacco industry machines.

### BACKGROUND

Tobacco industry products, such as cigarettes, may comprise segment filters with various filtering materials and structural elements. The segments may have a function of spacer elements, for example thin-walled or thick-walled tubes, tobacco smoke stream diffusing elements, for example sintered elements, smooth or porous elements, as well as elements for directing tobacco smoke flow. Such segments, comprised in the segment filter, typically have a form of rod-like elements. The term rod-like elements as used herein also relates to final products, such as cigarettes or filter rods.

The aim of the present invention is to provide a device, system and method for feeding groups of rod-like elements, in particular in tobacco industry machines.

US patent application 2009/0145449 and US patent 4185941 both disclose a method and an apparatus for assembling groups of filter segments in tobacco industry for cigarettes.

### SUMMARY

There is disclosed a feeding system, a feeding unit, a single element feeder, an element group feeder and a feeding system for feeding groups of rod-like elements according to the appended claims.

The present invention allows to efficiently feed rod-like elements to a receiving device.

### BRIEF DESCRIPTION OF FIGURES

The present invention is shown by means of example embodiments in a drawing, in which:
Figs. 1 and 2 show a feeding system;
Fig. 3 shows a pusher in an extracted position;
Fig. 4 shows the pusher in a retracted position;
Fig. 5 shows the pusher in a side view;
Fig. 6 shows schematically a feeding device.

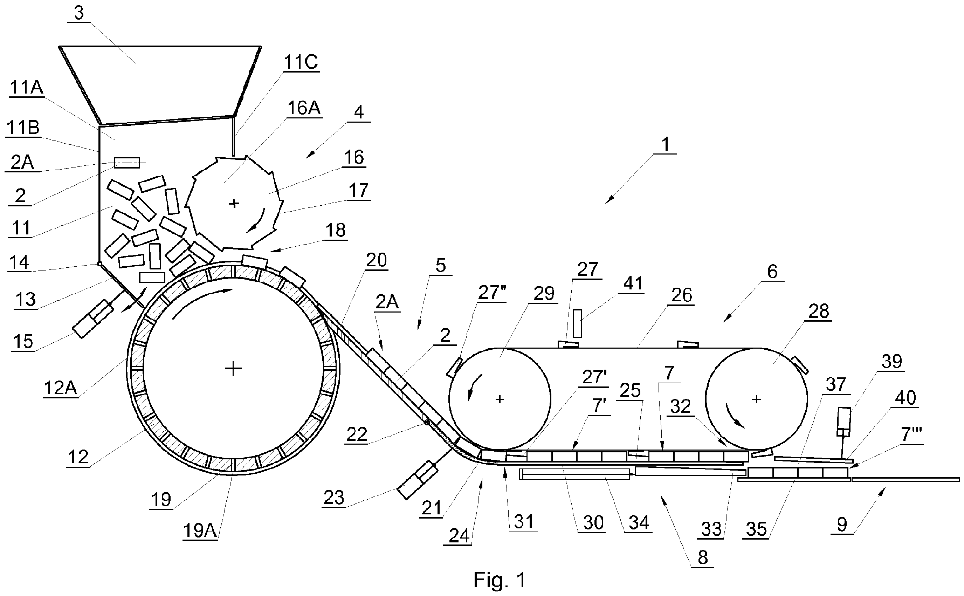

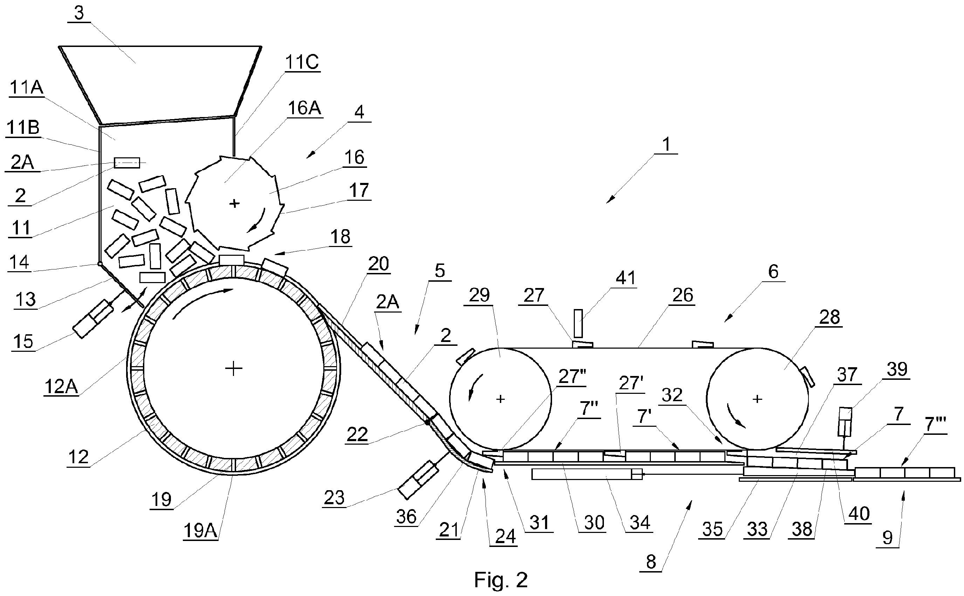

As shown in Figs. 1 and 2, a feeding system 1 for feeding groups 7 of rod-like elements 2 comprises a container 3 for the rod-like elements 2, a single element feeder 4 for feeding individual rod-like elements 2, an intermediate storage 5, an elements group feeder 6 for feeding the groups 7 of the rod-like elements 2, and a pushing unit 8 for ejecting the groups 7 to a device configured to receive the group 7. In the presented embodiment, the group 7 is fed to a receiving device, while the figure shows only a support element 9 of the receiving device, on which the group 7 is placed. The single element feeder 4 has a single-layer duct 11 formed by two sidewalls 11A (parallel to a main plane of the figure), which are spaced apart from each other by a distance greater than a diameter of the single rod-like element 2, a back wall 11B and a front wall 11C (for an operator observing the device from the side of the receiving device). The distance between the side walls 11A may be from 1,05 to 1,5 of the diameter of the rod-like element 2 - owing to this, the rod-like elements 2 are arranged in the single-layer duct 11 one above each other and not side by side, provided that the length of the rod-like elements 2 is greater than their diameter. The single-layer duct 11 is limited from the bottom by a groove 12A on a circumferential surface of a feeding wheel 12 and a displaceable wall 13, used for agitating the rod-like elements 2 accumulated in the single-layer duct 11. The displaceable wall 13 is mounted pivotally on a hinge 14 and is movable by an actuator 15. At the bottom of the groove 12A there may be present openings 19A for holding the rod-like elements 2 by means of a negative pressure, wherein the negative pressure is supplied to the openings by passages 19. Above the feeding wheel 12, there is a shoving away wheel 16 with multiple shoving away surfaces 17 located on its circumference. The shoving away surfaces 17 are shaped such that a distance of a particular surface from an axis of the shoving away wheel 16 decreases in a direction of rotation of the shoving away wheel 16. An outlet 18 of the single element feeder 4 is positioned between the feeding wheel 12 and the shoving away wheel 16. The shoving away wheel 16 and the feeding wheel 12 rotate both in a clockwise direction, wherein at the area of the outlet 18, their circumferential surfaces move counterwise. A peripheral speed of the shoving away wheel may be equal or smaller than the peripheral speed of the feeding wheel 12, for example it may be equal to half of the peripheral speed of the feeding wheel 12. The shoving away surfaces are directed such that during the rotation of the shoving away wheel 16 they gradually push the elements 2 away from the axis of rotation 16A. A width of the outlet duct 18 enables transporting of the elements 2 with small clearance.

The rod-like elements 2 that are accumulated in the container 3 move to the single-layer duct 11, wherein the axes 2A of the rod-like elements 2 are positioned substantially in parallel to the walls 11A. The rod-like elements 2 which are accumulated in the duct 11 are agitated by means of the swinging displaceable wall 13, while the rotating feeding wheel 12 collects the rod-like elements 2 by means of negative pressure and/or by friction and moves them to the outlet 18. In order to efficiently feed the individual elements 2, the excess of the elements 2 which move to the outlet 18 is pushed away by the shoving away wheel 16. The rod-like elements 2, fed by the single element feeder 4 from the outlet 18, fall into and slide along the storage duct 20 of the intermediate storage 5. The single element feeder 4 may operate in a continuous manner, but the rod-like elements 2 are usually fed from the outlet 18 in uneven time intervals. The intermediate storage 5 receives the rod-like elements 2 that are fed, wherein the amount of the rod-like elements 2 in the storage duct 20 may vary.

In the lower part of the intermediate storage 5, at the end of the storage duct 20, there is a tilting track 21, which has two positions. The first position of the tilting track 21 is shown in Fig. 1. In the first position, the rod-like elements 2 slide out from an outlet 24 of the storage duct 20, under the force of gravity, through an inlet 31 to a transporting duct 25 of the elements group feeder 6. The tilting track 21 may tilt about a hinge 22, wherein the change of position of the tilting track 21 is effected by means of an actuator 23. The second position of the tilting track 21 is shown in Fig. 2. In the second position, the rod-like elements 2 cannot slide into the transporting duct 25, because they stop at a recess 36 that is formed therein. The elements group feeder 6 has a form of a chain transporter 26 with shovels 27, wherein the chain transporter 26 is rolled around chain wheels 28 and 29. The position of the shovels 27 may be detected by means of sensors 41 located in any position at the track of movement of the shovels, because the shovels are spaced at equal distances from each other. The position of the shovels 27 may be controlled by an electronic system, such as an encoder installed in a drive system. The shovel 27 may have a length corresponding to a length of the recess 36 - this enables to stop the shovels just behind the prepared group 7 of the rod-like elements 2 in the transporting duct 25. Alternatively, the elements group transporter 26 may have a form of a belt transporter. The elements group feeder 6 may comprise the intermediate storage 5.

The rod-like elements 2 in the groups 7 are moved by the shovels 27 along the transporting duct 25 from the inlet 31 to an outlet 32. The shovel 27' (Fig. 1) of the transporter 26 pushes the group 7', and the consecutive rod-like elements 2 from the intermediate storage 5 slide gravitationally into the inlet 31. After inputting an amount of the rod-like elements 2 that forms the group 7, the tilting track 21 is lowered to the position shown in Fig. 2 so as to stop the feeding of the elements 2 to the transporting duct 25. The time at which the track 21 is lowered may depend on the movement of the shovels 27 in the operation cycle of the transporter 26 or may depend on the activation of the sensor 41. The tilting track has to be lowered to an extent at which the shovel 27 may pass above the rod-like elements 2 that are stopped at the recess 36. The extent of the lowering of the first element 2 inside the recess 36 may be from 0.2 to 1 diameter of the element 2, wherein the first element 2 may abut a track 30 or another limiter. After the lowering of the tilting track 21, the group 7" shown in Fig. 2 is formed. After passing of the shovel 27", the tilting track 21 is shifted again (which is time-dependent or dependent on the sensor activation) to the position shown in Fig. 1. During the formation of the group 7", the first rod-like element 2 of the group 7" comes into contact with the shovel 27' and the last rod-like element 2 of the group 7" comes into contact with the shovel 27".

The groups 7 of the rod-like elements 2 are transferred from the outlet 32 to the pushing unit 8. The pushing unit 8 comprises a pusher 33 driven by an actuator 34 and a track 35 for guiding the groups 7 of the rod-like elements, wherein the groups 7 move in an outlet duct 37. A socket 9 for receiving the groups 7 is present behind the track 35, in front of the outlet duct 37.

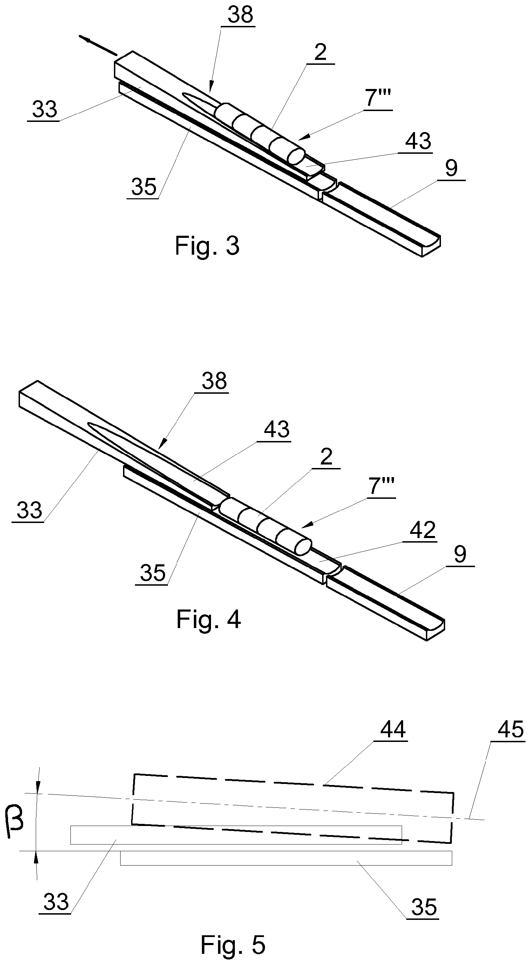

Fig. 1 shows the group 7"' of the rod-like elements 2 positioned on the track 35, which after the action of the pushing unit 8 is pushed by the pusher 33 onto a supporting element 9 of the receiving unit, as shown in Fig. 2. During retraction of the pusher 33, another group 7 may be fed by the elements group feeder 6. The group 7 is ejected from the transporting duct 25 through the outlet 32 first on an upper surface 38 of the pusher 33 and next it is slid onto the track 35 after the retraction of the pusher 33 to the position as shown in Fig. 1. While the group 7 is being transferred on the track 35, the group 7 is not separated and the individual elements 2 are not rotated - because that the surface 38 is inclined at the angle from 0.5° to 5° from the surface of the track 35 and the group is therefore transferred gently. The angle of inclination of the surface 38 with respect to the surface of the track 35 is preferably from 3° to 4°. The rod-like elements 2 in the group 7 that is fed are slid from the minimal height onto the track 35. In order to maintain a stable holding of the rod-like elements 2, the track 35 may have a surface 42 in a form of a convex portion of a cylinder, and the pusher 33 may also have the upper surface 38 partially formed as a convex portion of a cylinder 43, as shown in Fig. 3. The inclination angle β of an axis 45 of this portion with respect to the track 35 (Fig. 5) is from 0.5° to 5°, wherein the theoretical cylinder is indicated by reference 44, wherein a part of the surface comprises the portion of the cylinder 43. The speed of the retraction of the pusher 33 to the position shown in Fig. 4 is at least two times higher than the speed of the pusher 33 during the feeding of the group 7 to the receiving unit. The duration of lowering of the group 7 of the rod-like elements 2 on the track 35 depends on the time of retraction of the pusher 33, because the elements 2 are slid from the upper surface 38 of the pusher 33. During the retraction of the pusher 33, the group 7 may be pushed towards the surface 38 by an upper track 40. The track 40 may be moved by an actuator 39. The track 40 may have a form of a spring or a stiff element mounted on a spring. The retraction of the pusher 33 may be effected simultaneously with the motion of the transporter 26 - in such a case, the motion ejecting the group 7 to the receiving unit may be effected immediately after retraction of the pusher 33.

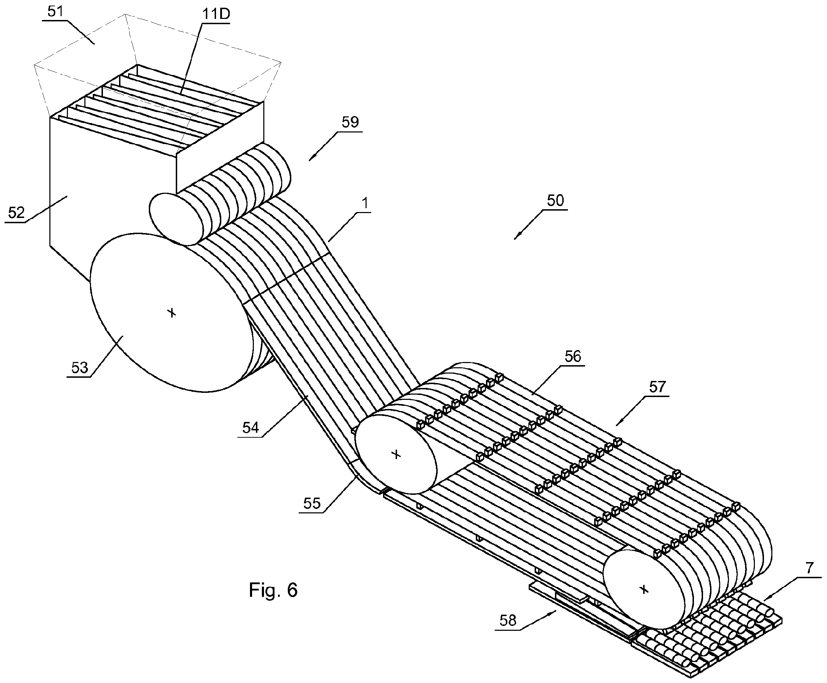

Fig. 6 shows schematically a feeding unit 50 for feeding the group 7 of the rod-like elements 2 comprising at least two feeding systems 1 for feeding the groups 7 of the rod-like elements 2. The feeding unit 50 has a container 51 for the rod-like elements 2, from which the feeding systems 1 are supplied, wherein upper edges 11D of the single-layer ducts 11 of the feeding systems 1 may be inclined at different angles, for example may be inclined alternately in opposite directions while maintaining the angle of inclination in the range from 5° to 30° from horizontal. The single-layer ducts 11 form a block of ducts 52. The feeding wheels 12 of particular feeding systems may integrated and may have a form of a feeding drum 53. The intermediate storages may form an intermediate storage 54. The tilting tracks 21 may be mounted on a common shaft forming a tilting track system 55 and may be operated simultaneously. The transporters 26 may be integrated to form a common transporter 56 of the system 57 feeding the groups of the rod-like elements. The pushers 33 may be integrated to form a pushing system 58 operated by a common mechanism. In that device, the feeding unit 59 for feeding the rod-like elements 2 comprises the container 51, the block of ducts 52 and the feeding drum 53.

## Claims

1. A feeding system (1) for feeding groups (7) of rod-like elements (2) for a tobacco industry machine, wherein the group (7) comprises at least two rod-like elements (2) arranged coaxially next to each other, the feeding system comprising:
- a container (3) for the rod-like elements (2);
- a single element feeder (4) for feeding individual rod-like elements (2) from the container (3) and comprising:
∘ a single-layer duct (11) and
∘ an outlet (18) formed by a feeding groove (12A) of a feeding wheel (12) and a circumferential surface of a shoving away wheel (16);
- an intermediate storage (5) for transferring the rod-like elements (2) from the single element feeder (4) along a storage duct (20) to an elements group feeder (6), wherein an outlet (24) of the storage duct (20) has a tilting track (21) forming a recess (36) for stopping the rod-like elements (2);
- wherein the elements group feeder (6) comprises:
∘ a transporting duct (25) connected to the storage duct (20); and
∘ a transporter (26) comprising shovels (27), wherein the shovels (27) are configured to transport the groups (7) of the rod-like elements (2) one after the other along the transporting duct (25) from the storage duct (20) to an outlet duct (37);
- and a pushing unit (8) comprising a reciprocally movable pusher (33), configured to eject the group (7) of the rod-like elements (2) from the outlet duct (37).

2. The feeding system (1) according to claim 1, wherein the feeding groove (12A) of the feeding wheel (12) has openings (19A) for supplying negative pressure to the surface of the feeding groove (12A).

3. The feeding system (1) according to any of previous claims, wherein at least one portion of a bottom of the single-layer duct (11) of the single element feeder (4) is movable to force agitation of the rod-like elements (2) accumulated in the single-layer duct (11) of the single element feeder (4).

4. The feeding system (1) according to any of previous claims, wherein the recess (36) is configured to receive at least one rod-like element (2).

5. The feeding system (1) according to any of previous claims, wherein the shovels (27) of the transporter (26) have a length corresponding to a length of the tilting track (21) of the storage duct (20).

6. The feeding system (1) according to any of previous claims, wherein the tilting track (21) of the storage duct (20) is configured to be lowered and raised by means of an actuator (23).

7. A feeding unit (50) for feeding groups (7) of rod-like elements (2) for a tobacco industry machine, wherein the group (7) comprises at least two rod-like elements (2) arranged coaxially next to each other, the feeding unit (50) comprising at least two feeding systems (1) according to any of claims 1 to 6 arranged adjacent to each other and having a common container (51) for the rod-like elements (2) for supplying the feeding systems (1).

8. A single element feeder (4) for feeding individual rod-like elements (2) for a tobacco industry machine, wherein the single element feeder (4) comprises:
- a single-layer duct (11) formed by at least two sidewalls (11A) distanced from each other by a distance from 1.05 to 1.5 of a diameter of the rod-like element (2) and walls (11B, 11C) connecting the sidewalls (11A);
- a feeding wheel (12) having a circumferential feeding groove (12A) for feeding individual rod-like elements (2) to an outlet (18) of the single element feeder (4) wherein the feeding groove (12A) constitutes at least a portion of a bottom of the single-layer duct (11);
- a shoving away wheel (16) for pushing an excess of the rod-like elements (2) away from the outlet (18) of the single element feeder (4), wherein the shoving away wheel (16) rotates in a direction opposite with respect to a direction of rotation of the feeding wheel;
**characterized in that**:
- the shoving away wheel (16) for pushing away the excess of the rod-like elements (2) has at its circumference multiple inclined surfaces (17), wherein a distance of the surface (17) from an axis of the shoving away wheel (16) decreases in the direction of the rotation of the shoving away wheel (16).

9. The single element feeder (4) according to claim 8, wherein the feeding groove (12A) of the feeding wheel (12) comprises openings (19A) for supplying negative pressure to the surface of the feeding groove (12A).

10. The single element feeder (4) according to any of claims 8 to 9, wherein at least one wall of the single-layer duct (11) or a portion of the bottom of the single-layer duct (11) is displaceable and movable to force agitation of the rod-like elements (2) accumulated in the single-layer duct (11).

11. An elements group feeder (6) for a tobacco industry machine, wherein the group (7) comprises at least two rod-like elements (2) arranged coaxially next to each other, the elements group feeder (6) comprising:
- an intermediate storage (5), configured to feed a train (2A) of the rod-like elements (2) along a storage duct (20);
- a transporting duct (25) configured to receive the rod-like elements (2) from the storage duct (20);
- a transporter (26) with shovels (27) configured to transport the groups (7) of the rod-like elements (2) in the transporting duct (25) from the storage duct (20) to an outlet duct (37), wherein the shovels (27) are movable in the transporting duct (25) in equal distances from each other, such that the first rod-like element (2) of the group (7") comes into contact with one shovel (27') and the last rod-like element (2) of the group (7") comes into contact with a subsequent shovel (27");
**characterized in that**
- a tilting track (21) is provided at an outlet (24) of the storage duct (20) to the transporting duct (25), the tilting track (21) configured such that after lowering of the tilting track (21), a recess (36) is formed, into which at least one element (2) of the train (2A) of the rod-like elements (2) fed via the storage duct (20) can slide to stop the train/string (2A).

12. The elements group feeder (6) according to claim 11, wherein the shovels (27) have a length corresponding to a length of the tilting track (21) of the storage duct (20).

13. The elements group feeder (6) according to any of claims 11 to 12, wherein the tilting track (21) is configured to be lowered and raised by means of an actuator (23).

14. A feeding system (1) for feeding groups (7) of rod-like elements (2) for a tobacco industry machine, wherein the group (7) comprises at least two rod-like elements (2) arranged coaxially next to each other, the feeding system (1) comprising:
- a container (3) for the rod-like elements (2);
- a single element feeder (4) for feeding individual rod-like elements (2) comprising a single-layer duct (11), wherein an outlet (18) of the single element feeder (4) is formed by a feeding groove (12A) of a feeding wheel (12) and a circumferential surface of a shoving away wheel (16);
- an intermediate storage (5) for transferring the rod-like elements (2) from the single element feeder (4) along the storage duct (20) to an elements group feeder (6), wherein an outlet (24) of the storage duct (20) has a tilting track (21) configured to form a recess (36) for stopping the rod-like elements (2);
- wherein the elements group feeder (6) comprises a transporting duct (25), configured to receive the rod-like elements (2) from the storage duct (20), a transporter (26) having shovels (27), wherein the shovels (27) are configured to transport the groups (7) of the rod-like elements (2) one after the other along the transporting duct (25) from the storage duct (20) to an outlet duct (37);
- a pushing unit (8) comprising a reciprocally movable pusher (33) for ejecting the group (7) of the rod-like elements (2) from the outlet duct (37);
**characterized in that**:
- an upper surface (38) of the pusher (33) is inclined with respect to a bottom of the outlet duct.

15. The feeding system (1) according to claim 14, wherein the upper surface (38) of the pusher (33) is inclined at an angle from 0,5° to 5°, preferably from 3° to 4°, with respect to the bottom of the outlet duct.

## Patentansprüche

1. Zuführsystem (1) zum Zuführen von Gruppen (7) von stabförmigen Elementen (2) für eine Tabakindustrie-Maschine, wobei die Gruppe (7) mindestens zwei stabförmige Elemente (2) umfasst, die koaxial nebeneinander angeordnet sind; wobei das Zuführsystem umfasst:
- einen Behälter (3) für die stabförmigen Elemente (2);
- eine Einzelelementzuführvorrichtung (4) zum Zuführen von einzelnen stabförmigen Elementen (2) aus dem Behälter (3), und die umfasst:
∘ einen einschichtigen Kanal (11) und
∘ einen Auslass (18), der von einer Zuführnut (12A) eines Zuführrades (12) und einer Umfangsfläche eines Wegschubrads (16) gebildet ist;
- einen Zwischenspeicher (5) zum Versetzen der stabförmigen Elemente (2) von der Einzelelementzuführvorrichtung (4) entlang eines Speicherkanals (20) zu einem Elementengruppenzuführvorrichtung (6), wobei ein Auslass (24) des Speicherkanals (20) eine Kippschiene (21) aufweist, die eine Aussparung (36) zum Anhalten der stabförmigen Elemente (2) bildet;
- wobei die Elementengruppenzuführvorrichtung (6) umfasst:
∘ einen Transportkanal (25), der mit dem Speicherkanal (20) verbunden ist; und
∘ einen Transporteinrichtung (26), die Schaufeln (27) umfasst, wobei die Schaufeln (27) ausgestaltet sind, um die Gruppen (7) der stabförmigen Elemente (2) nacheinander entlang des Transportkanals (25) vom Speicherkanal (20) zu einem Auslasskanal (37) zu transportieren;
- und eine Schiebeeinheit (8), die einen sich hin- und herbewegbaren Schieber (33) umfasst, die ausgestaltet ist, um die Gruppe (7) der stabförmigen Elemente (2) aus dem Auslasskanal (37) auszuwerfen.

2. Zuführsystem (1) nach Anspruch 1, wobei die Zuführnut (12A) des Zuführrades (12) Öffnungen (19A) zum Zuführen von Unterdruck zur Oberfläche der Zuführnut (12A) aufweist.

3. Zuführsystem (1) nach einem der vorhergehenden Ansprüche, wobei mindestens ein Teil eines Bodens des einschichtigen Kanals (11) der Einzelelementzuführvorrichtung (4) beweglich ist, um ein Rühren der im einschichtigen Kanal (11) der Einzelelementzuführvorrichtung (4) angesammelten stabförmigen Elemente (2) zu erzwingen.

4. Zuführsystem (1) nach einem der vorhergehenden Ansprüche, wobei die Aussparung (36) ausgestaltet ist, um mindestens ein stabförmiges Element (2) aufzunehmen.

5. Zuführsystem (1) nach einem der vorhergehenden Ansprüche, wobei die Schaufeln (27) der Transporteinrichtung (26) eine Länge aufweisen, die einer Länge der Kippschiene (21) des Speicherkanals (20) entspricht.

6. Zuführsystem (1) nach einem der vorhergehenden Ansprüche, wobei die Kippschiene (21) des Speicherkanals (20) ausgestaltet ist, um mittels eines Stellglieds (23) abgesenkt und angehoben zu werden.

7. Zuführeinheit (50) zum Zuführen von Gruppen (7) von stabförmigen Elementen (2) für eine Tabakindustrie-Maschine, wobei die Gruppe (7) mindestens zwei stabförmige Elemente (2) umfasst, die koaxial nebeneinander angeordnet sind; wobei die Zuführeinheit (50) mindestens zwei Zuführsysteme (1) nach einem der Ansprüche 1 bis 6 umfasst, die nebeneinander angeordnet sind und einen gemeinsamen Behälter (51) für die stabförmigen Elemente (2) zum Versorgen der Zuführsysteme (1) aufweisen.

8. Einzelelementzuführvorrichtung (4) zum Zuführen einzelner stabförmiger Elemente (2) für eine Tabakindustrie-Maschine, wobei die Einzelelementzuführvorrichtung (4) umfasst:
- einen einschichtigen Kanal (11), der von mindestens zwei Seitenwänden (11A), die voneinander um einen Abstand von 1,05 bis 1,5 eines Durchmessers des stabförmigen Elements (2) beabstandet sind, und die Seitenwände (11A) verbindenden Wänden (11B, 11C) gebildet ist;
- ein Zuführrad (12), das eine umlaufende Zuführnut (12A) zum Zuführen einzelner stabförmiger Elemente (2) zu einem Auslass (18) der Einzelelementzuführvorrichtung (4) aufweist, wobei die Zuführnut (12A) mindestens einen Teil eines Bodens des einschichtigen Kanals (11) bildet;
- ein Wegschubrad (16) zum Wegschieben eines Überschusses der stabförmigen Elemente (2) vom Auslass (18) der Einzelelementzuführvorrichtung (4), wobei sich das Wegschubrad (16) in einer Richtung dreht, die in Bezug auf eine Drehrichtung des Zuführrades entgegengesetzt ist;
**dadurch gekennzeichnet, dass**:
- das Wegschubrad (16) zum Wegschieben des Überschusses der stabförmigen Elemente (2) an seinem Umfang mehrere geneigte Flächen (17) aufweist, wobei ein Abstand von der Oberfläche (17) von einer Achse des Webschubrades (16) in der Drehrichtung des Wegschubrades (16) abnimmt.

9. Einzelelementzuführvorrichtung (4) nach Anspruch 8, wobei die Zuführnut (12A) des Zuführrades (12) Öffnungen (19A) zum Zuführen von Unterdruck zur Oberfläche der Zuführnut (12A) aufweist.

10. Einzelelementzuführvorrichtung (4) nach einem der Ansprüche 8 bis 9, wobei mindestens eine Wand des einschichtigen Kanals (11) oder ein Teil des Bodens des einschichtigen Kanals (11) verschiebbar und beweglich ist, um ein Rühren der im einschichtigen Kanal (11) angesammelten stabförmigen Elemente (2) zu erzwingen.

11. Elementengruppenzuführvorrichtung (6) für eine Tabakindustrie-Maschine, wobei die Gruppe (7) mindestens zwei stabförmige Elemente (2) umfasst, die koaxial nebeneinander angeordnet sind, wobei die Elementengruppenzuführvorrichtung (6) umfasst:
- einen Zwischenspeicher (5), der ausgestaltet ist, um einen Zug (2A) der stabförmigen Elemente (2) entlang eines Speicherkanals (20) zuzuführen;
- einen Transportkanal (25), der ausgestaltet ist, um die stabförmigen Elemente (2) von dem Speicherkanal (20) aufzunehmen;
- eine Transporteinrichtung (26) mit Schaufeln (27), die ausgestaltet sind, um die Gruppen (7) der stabförmigen Elemente (2) in dem Transportkanal (25) vom Speicherkanal (20) zu einem Auslasskanal (37) zu transportieren, wobei die Schaufeln (27) in gleichen Abständen voneinander im Transportkanal (25) beweglich sind, so dass das erste stabförmige Element (2) der Gruppe (7") mit einer Schaufel (27') in Berührung kommt und das letzte stabförmige Element (2) der Gruppe (7") mit einer nachfolgenden Schaufel (27") in Berührung kommt;
**dadurch gekennzeichnet, dass**
- eine Kippschiene (21) an einem Auslass (24) des Speicherkanals (20) zum Transportkanal (25) bereitgestellt ist, wobei die Kippschiene (21) so ausgestaltet ist, dass nach dem Absenken der Kippschiene (21) eine Aussparung (36) ausgebildet ist, in die das mindestens eine Element (2) des Zuges (2A) der über den Speicherkanal (20) eingespeisten stabförmigen Elemente (2) gleiten kann, um den Zug/Strang (2A) anzuhalten.

12. Elementengruppenzuführvorrichtung (6) nach Anspruch 11, wobei die Schaufeln (27) eine Länge aufweisen, die einer Länge der Kippschiene (21) des Speicherkanals (20) entspricht.

13. Elementengruppenzuführvorrichtung (6) nach einem der Ansprüche 11 bis 12, wobei die Kippschiene (21) ausgestaltet ist, um mittels eines Stellglieds (23) abgesenkt und angehoben zu werden.

14. Zuführsystem (1) zum Zuführen von Gruppen (7) von stabförmigen Elementen (2) für eine Tabakindustrie-Maschine, wobei die Gruppe (7) mindestens zwei stabförmige Elemente (2) umfasst, die koaxial nebeneinander angeordnet sind; wobei das Zuführsystem (1) umfasst:
- einen Behälter (3) für die stabförmigen Elemente (2);
- eine Einzelelementzuführvorrichtung (4) zum Zuführen von einzelnen stabförmigen Elementen (2), die einen einschichtigen Kanal (11) umfasst, wobei ein Auslass (18) der Einzelelementzuführvorrichtung (4) von einer Zuführnut (12A) eines Zuführrades (12) und einer Umfangsfläche eines Wegschubrades (16) gebildet ist;
- einen Zwischenspeicher (5) zum Versetzen der stabförmigen Elemente (2) von der Einzelelementzuführvorrichtung (4) entlang des Speicherkanals (20) zu einer Elementengruppenzuführvorrichtung (6), wobei ein Auslass (24) des Speicherkanals (20) eine Kippschiene (21) aufweist, die ausgestaltet ist, um eine Aussparung (36) zum Anhalten der stabförmigen Elemente (2) zu bilden;
- wobei die Elementengruppenzuführvorrichtung (6) einen Transportkanal (25), der ausgestaltet ist, um die stabförmigen Elemente (2) von dem Speicherkanal (20) aufzunehmen, eine Transporteinrichtung (26), die Schaufeln (27) aufweist, wobei die Schaufeln (27) ausgestaltet sind, um die Gruppen (7) der stabförmigen Elemente (2) nacheinander entlang des Transportkanals (25) vom Speicherkanal (20) zu einem Auslasskanal (37) zu transportieren;
- eine Schiebeeinheit (8), die einen sich hin- und herbewegbaren Schieber (33) zum Auswerfen der Gruppe (7) der stabförmigen Elemente (2) aus dem Auslasskanal (37) umfasst;
**dadurch gekennzeichnet, dass**:
- eine Oberseite (38) des Schiebers (33) in Bezug auf einen Boden des Auslasskanals geneigt ist.

15. Zuführsystem (1) nach Anspruch 14, wobei die Oberseite (38) des Schiebers (33) in einem Winkel von 0,5° bis 5°, vorzugsweise von 3° bis 4°, in Bezug auf den Boden des Auslasskanals geneigt ist.

## Revendications

1. Système de distribution (1) destiné à distribuer des groupes (7) d'éléments en forme de tige (2) pour une machine d'industrie du tabac, dans lequel le groupe (7) comprend au moins deux éléments en forme de tige (2) agencés coaxialement l'un à côté de l'autre, le système de distribution comprenant :
- un contenant (3) pour les éléments en forme de tige (2) ;
- un distributeur d'élément unique (4) destiné à distribuer des éléments en forme de tige individuels (2) depuis le contenant (3) et comprenant :
∘ un conduit en une seule couche (11) et
∘ une évacuation (18) formée par une rainure distributrice (12A) d'une roue distributrice (12) et une surface circonférentielle d'une roue de rejet (16) ;
- un stockage intermédiaire (5) destiné à transférer les éléments en forme de tige (2) depuis le distributeur d'élément unique (4) le long d'un conduit de stockage (20) vers un distributeur d'un groupe d'éléments (6), dans lequel une évacuation (24) du conduit de stockage (20) a une piste basculante (21) formant un creux (36) destiné à arrêter les éléments en forme de tige (2) ;
- dans lequel le distributeur d'un groupe d'éléments (6) comprend :
∘ un conduit transporteur (25) connecté au conduit de stockage (20) ; et
∘ un transporteur (26) comprenant des spatules (27), dans lequel les spatules (27) sont configurées pour transporter les groupes (7) des éléments en forme de tige (2) les uns après les autres le long du conduit de transport (25) depuis le conduit de stockage (20) vers un conduit d'évacuation (37) ;
- et une unité poussoir (8) comprenant un poussoir mobile en un mouvement de va-et-vient (33), configurée pour éjecter le groupe (7) des éléments en forme de tige (2) depuis le conduit d'évacuation (37).

2. Système de distribution (1) selon la revendication 1, dans lequel la rainure distributrice (12A) de la roue distributrice (12) a des ouvertures (19A) destinées à délivrer une pression négative à la surface de la rainure distributrice (12A).

3. Système de distribution (1) selon l'une quelconque revendication précédente, dans lequel au moins une partie d'un fond du conduit en une seule couche (11) du distributeur d'élément unique (4) est mobile pour forcer une agitation des éléments en forme de tige (2) accumulés dans le conduit en une seule couche (11) du distributeur d'élément unique (4).

4. Système de distribution (1) selon l'une quelconque des revendications précédentes, dans lequel le creux (36) est configuré pour recevoir au moins un élément en forme de tige (2).

5. Système de distribution (1) selon l'une quelconque des revendications précédentes, dans lequel les spatules (27) du transporteur (26) ont une longueur correspondant à une longueur de la piste basculante (21) du conduit de stockage (20).

6. Système de distribution (1) selon l'une quelconque des revendications précédentes, dans lequel la piste basculante (21) du conduit de stockage (20) est configurée pour être abaissée et relevée au moyen d'un actionneur (23).

7. Unité de distribution (50) destinée à distribuer des groupes (7) d'éléments en forme de tige (2) pour une machine d'industrie du tabac, dans lequel le groupe (7) comprend au moins deux éléments en forme de tige (2) agencés coaxialement l'un à côté de l'autre, l'unité de distribution (50) comprenant au moins deux systèmes de distribution (1) selon l'une quelconque des revendications 1 à 6 agencés adjacents l'un à l'autre et ayant un contenant commun (51) pour les éléments en forme de tige (2) destinés à alimenter les systèmes de distribution (1).

8. Distributeur d'élément unique (4) destiné à distribuer des éléments individuels en forme de tige (2) pour une machine d'industrie du tabac, dans lequel le distributeur d'élément unique (4) comprend :
- un conduit en une seule couche (11) formé par au moins deux parois latérales (11A) éloignées l'une de l'autre par une distance allant de 1,05 à 1,5 d'un diamètre de l'élément en forme de tige (2) et des parois (11B, 11C) connectant les parois latérales (11A) ;
- une roue distributrice (12) ayant une rainure distributrice circonférentielle (12A) destinée à distribuer des éléments en forme de tige individuels (2) vers une évacuation (18) du distributeur d'élément unique (4) dans lequel la rainure distributrice (12A) constitue au moins une partie d'un fond du conduit en une seule couche (11) ;
- une roue de rejet (16) destinée à pousser un excès d'éléments en forme de tige (2) à distance de l'évacuation (18) du distributeur d'élément unique (4), dans lequel la roue de rejet (16) tourne dans un sens opposé par rapport à un sens de rotation de la roue distributrice ; **caractérisé en ce que** :
- la roue de rejet (16) destinée à pousser l'excès des éléments en forme de tige (2) a à sa circonférence de multiples surfaces inclinées (17), dans lequel une distance de la surface (17) depuis un axe de la roue de rejet (16) diminue dans le sens de la rotation de la roue de rejet (16).

9. Distributeur d'élément unique (4) selon la revendication 8, dans lequel la rainure distributrice (12A) de la roue distributrice (12) comprend des ouvertures (19A) destinées à délivrer une pression négative à la surface de la rainure distributrice (12A).

10. Distributeur d'élément unique (4) selon l'une quelconque des revendications 8 à 9, dans lequel au moins une paroi du conduit en une seule couche (11) ou une partie du fond du conduit en une seule couche (11) est déplaçable et mobile pour forcer une agitation des éléments en forme de tige (2) accumulés dans le conduit en une seule couche (11).

11. Distributeur d'un groupe d'éléments (6) pour une machine d'industrie du tabac, dans lequel le groupe (7) comprend au moins deux éléments en forme de tige (2) agencés coaxialement l'un à côté de l'autre, le distributeur d'un groupe d'éléments (6) comprenant :
- un stockage intermédiaire (5), configuré pour distribuer un train (2A) des éléments en forme de tige (2) le long d'un conduit de stockage (20) ;
- un conduit de transport (25) configuré pour recevoir les éléments en forme de tige (2) depuis le conduit de stockage (20) ;
- un transporteur (26) avec des spatules (27) configurés pour transporter les groupes (7) des éléments en forme de tige (2) dans le conduit de transport (25) depuis le conduit de stockage (20) vers un conduit d'évacuation (37), dans lequel les spatules (27) sont mobiles dans le conduit de transport (25) à égale distance les unes des autres, de manière à ce que le premier élément en forme de tige (2) du groupe (7") vienne en contact avec une spatule (27') et le dernier élément en forme de tige (2) du groupe (7") vienne en contact avec une spatule suivante (27") ; **caractérisé en ce que**
- une piste basculante (21) est prévue au niveau d'une évacuation (24) du conduit de stockage (20) vers le conduit de transport (25), la piste basculante (21) configurée de manière à ce que après abaissement de la piste basculante (21), un creux (36) soit formé, dans lequel au moins un élément (2) du train (2A) des éléments en forme de tige (2) distribué via le conduit de stockage (20) puisse glisser pour arrêter le train/la chaîne (2A).

12. Distributeur d'un groupe d'éléments (6) selon la revendication 11, dans lequel les spatules (27) ont une longueur correspondant à une longueur de la piste basculante (21) du conduit de stockage (20).

13. Distributeur d'un groupe d'éléments (6) selon l'une quelconque des revendications 11 à 12, dans lequel la piste basculante (21) est configurée pour être abaissée et relevée au moyen d'un actionneur (23).

14. Système de distribution (1) destiné à distribuer des groupes (7) d'éléments en forme de tige (2) pour une machine d'industrie du tabac, dans lequel le groupe (7) comprend au moins deux éléments en forme de tige (2) agencés coaxialement l'un à côté de l'autre, le système de distribution (1) comprenant :
- un contenant (3) pour les éléments en forme de tige (2) ;
- un distributeur d'élément unique (4) destiné à distribuer des éléments en forme de tige individuels (2) comprenant un conduit en une seule couche (11), dans lequel une évacuation (18) du distributeur d'élément unique (4) est formé par une rainure distributrice (12A) d'une roue distributrice (12) et une surface circonférentielle d'une roue de rejet (16) ;
- un stockage intermédiaire (5) destiné à transférer les éléments en forme de tige (2) depuis le distributeur d'élément unique (4) le long du conduit de stockage (20) vers un distributeur d'un groupe d'éléments (6), dans lequel une évacuation (24) du conduit de stockage (20) a une piste basculante (21) configurée pour former un creux (36) destiné à arrêter les éléments en forme de tige (2) ;
- dans lequel le distributeur d'un groupe d'éléments (6) comprend un conduit de transport (25), configuré pour recevoir les éléments en forme de tige (2) depuis le conduit de stockage (20), un transporteur (26) ayant des spatules (27), dans lequel les spatules (27) sont configurées pour transporter les groupes (7) des éléments en forme de tige (2) les uns après les autres le long du conduit de transport (25) depuis le conduit de stockage (20) vers un conduit d'évacuation (37) ;
- une unité poussoir (8) comprenant un poussoir mobile en un mouvement de va-et-vient (33) destinée à éjecter le groupe (7) des éléments en forme de tige (2) depuis le conduit d'évacuation (37) ; **caractérisé en ce que** :
- une surface supérieure (38) du poussoir (33) est inclinée par rapport à un fond du conduit d'évacuation.

15. Système de distribution (1) selon la revendication 14, dans lequel la surface supérieure (38) du poussoir (33) est inclinée selon un angle de 0,5° à 5 °, de préférence de 3 ° à 4 °, par rapport au fond du conduit d'évacuation.
